# NEW EUROPEAN PATENT SPECIFICATION

(11) **EP 2 411 446 B2**
(45) Date of publication and mention of the opposition decision: **13.09.2017**
(45) Mention of the grant of the patent: 25.06.2014
(21) Application number: 10710044.8
(22) Date of filing: 24.03.2010
(51) Int. Cl.: C08G 63/52, C09D 167/06, C08F 283/01

(54) **PROCESS FOR PREPARING UNSATURATED POLYESTER**
VERFAHREN ZUR HERSTELLUNG VON UNGESÄTTIGTEM POLYESTER
PROCÉDÉ DE PRÉPARATION DE POLYESTER INSATURÉ

(30) Priority: 25.03.2009 EP 09156131; 25.03.2009 EP 09156130; 25.03.2009 EP 09156139; 25.03.2009 EP 09156142; 25.03.2009 EP 09156137
(43) Date of publication of application: 01.02.2012
(73) Proprietor: DSM IP Assets B.V., 6411 TE Heerlen (NL)
(72) Inventor: SZKUDLAREK, Marian Henryk, 48527 Nordhorn (DE); JANSEN, Johan Franz Gradus Antonius, NL-6165 AP Geleen (NL); DUYVESTIJN, Stefanus Jacobus, NL-7417 ZR Deventer (NL)
(74) Representative: Diakoumakos, Konstantinos
(86) International application number: PCT/EP2010/053853
(87) International publication number: WO 2010/108968

(56) References cited:
- WO-A1-97/27253
- FR-A1- 2 288 118
- GB-A- 901 603
- GB-A- 1 282 854
- GB-A- 1 387 800
- US-A- 2 610 168
- US-A- 2 610 961
- US-A- 2 632 753
- US-A- 3 210 441
- US-A- 3 539 441
- US-A- 4 788 108
- US-A- 5 650 531
- JOHANNES KARL FINK: 'Reactive Polymers Fundamentals and Applications, A Concise Guide to Industrial Polymers', 2005, WILLIAM ANDREW, NORWICH, NY, USA, ISBN 0-8155-1515-4 page 1-38

## Description

The present invention relates to a process for preparing unsaturated polyester resin, suitable to be used in the manufacturing of structural parts, comprising itaconate ester units as reactive unsaturations in the resin.

Unsaturated polyester resin compositions currently applied for obtaining structural parts often contain considerable quantities of styrene as copolymerizable reactive diluent. As a result of the presence of styrene, styrene may escape during the preparation and curing, but also even during the envisaged longterm use thereof, and causes an undesirable odour, and possibly even also toxic effects. Thus there is a desire to reduce the styrene emission. Due to the fact that the unsaturated polyester resin is only copolymerizable, the amount of styrene in styrene containing resins can not be reduced further without detrimentally affecting the properties of the cured composites. Consequently there is a need for homopolymerizable unsaturated polyester resins. As used herein, an unsaturated polyester resin comprising itaconate ester units as reactive unsaturations is considered homopolymerizable in case at least 25 wt.% of the unsaturated dicarboxylic acid building blocks are are capable of homopolymerization, i.e.are itaconic acid building blocks.

It has however been found that homopolymerizable unsaturated polyester resins tend to gel (i.e. to polymerize) during its preparation, in particular when applying the standard UP synthesis procedure in which all the raw materials for the resin are mixed and condensed at higher temperatures.

For unsaturated polyesters to be used in the manufacturing of structural parts, the unsaturated polyesters must be able to free radical polymerise (i.e to cure) after having diluted the resin with reactive diluent. This means that gelation during preparation of the unsaturated polyester resin need to be avoided.

WO-A-9727253 describes the synthesis of itaconic based powder coating resins. In this publication, the standard UP synthesis procedure, in which all the raw materials for the resin are mixed and condensed at higher temperatures, is not applied. The homopolymerizable itaconic based unsaturated polyesters have been prepared by either using the prepolymer approach, in which a hydroxyl functional polymer or oligomer is modified in the second step with itaconic acid and condensed to low acid values, or by using the anhydride approach, in which hydroxyl functional polymers are modified with itaconic anhydride resulting in high acid value resins.

FR-A-1295841 discloses the preparation of unsaturated polyester comprising itaconate ester units as reactive unsaturations applying the standard unsaturated polyester synthesis procedure in the presence of hydroquinone. One of the disadvantages of using hydroquinone is that it may influence the curing rate of the resin. It is welll known that inhibitors may have an influence on the cure characteristics of the resin. Therefore, it is desired to have an alternative inhibitor that can be applied for preparing the resin. Furthermore, the inhibitors used in the resin synthesis may have a negative impact on the mechanical properties of the cured resin. In view of this, it is also desired to have an alternative inhibitor that can be applied for preparing the resin. Therefore, there is a strong desire to have alternative inhibitors that can be used for preparing unsaturated polyesters with itaconate ester units.

The object of the present invention is to provide an alternative inhibitor that can be applied in the standard unsaturated polyester synthesis procedure for preparing unsaturated polyester comprising itaconate ester units as reactive unsaturations, whereby the viscosities of the prepared resins are similar or even lower and the mechanical properties of the cured resins are similar or even better.

This object has been surprisingly been achieved in that the process comprises reacting at least itaconic acid and/or itaconic anhydride and at least one diol in the presence of benzoquinone and alkyl substituted benzoquinone, whereby the total amount of benzoquinone and alkyl substituted benzoquinone is at least 200 ppm (relative to the total amount of raw materials used to prepare the unsaturated polyester).

This is the more surprising since applying 100 ppm of benzoquinone or alkyl substituted benzoquinone results in gelation of the resin, while when applying 100 ppm hydroquinone no gelation occurs.

An additional advantage of the process of the present invention is that the mechanical properties of a cured object based on a resin prepared with the process according to the invention can be improved, in particular HDT.

The process of the present invention preferably comprises:
(i) charging the reactor with itaconic acid and/or itaconic anhydride and optionally other dicarboxylic acids, at least one diol and an inhibitor,
(ii) heating till a temperature of from 180 to 200 °C until the acid value is below 60,
(iii) cooling the resin, preferably to from 20 to 120 °C, and
(iv) optionally diluting the resin with reactive diluent,
(v) wherein the inhibitor is benzoquinone and alkyl substituted benzoquinone and whereby the total amount of benzoquinone and alkyl substituted benzoquinone is at least 200 ppm. As used herein, at least means higher than or equal to.

Preferably the total amount of benzoquinone and alkyl substituted benzoquinone inhibitor is at least 300 ppm, more preferably the amount of benzoquinone and alkyl substituted benzoquinone inhibitor is at least 400 ppm. The process of the present invention is preferably effected in the presence of at most 2000 ppm, more preferably at most 750 ppm of inhibitor.

The process is effected in the presence of benzoquinone and alkyl substituted benzoquinone. The process is preferably effected in the presence of at least 200 ppm alkyl substituted benzoquinone and in the presence of at least 200 ppm benzoquinone. It has been found that using the combination of benzoquinone and alkyl substituted benzoquinone has a synergetic effect on the decrease of viscosity of the prepared resin, while maintaining the thermal stability of the cured resin.

Non limited examples of alkyl substituted benzoquinone are 2-methyl benzoquinone, 2,3-dimethyl benzoquinone, 2,5-dimethyl benzoquinone, 2,6-dimethyl benzoquinone, trimethyl benzoquinone, tetramethyl benzoquinone, 2-tert.butyl benzoquinone, 2-tert.butyl 6-methyl benzoquinone. A preferred alkyl substituted benzoquinone is 2-methyl benzoquinone.

The unsaturated polyester according to the invention comprises itaconate ester units as building blocks having the following structural formula.

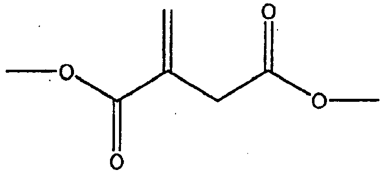

The itaconic ester units (also referred to as itaconic acid building blocks) contain an ethylenic unsaturation that is able to copolymerize with copolymerizable monomer in which the unsaturated polyester is diluted. The unsaturated polyester according to the invention can be manufactured by polycondensation of at least a diol and itaconic acid or itaconic acid anhydride as unsaturated dicarboxylic acid. The polycondensation may also be effected in the presence of other dicarboxylic acids containing reactive unsaturations, such as for example maleic acid or anhydride and fumaric acid and/or in the presence of saturated aliphatic dicarboxylic acids or anhydrides, like for example oxalic acid, succinic acid, adipic acid, sebacic acid and/or in the presence of aromatic saturated dicarboxylic acids or anhydrides like for example phthalic acid or anhydride and isophthalic acid. In the polymerisation is further used a diol, such as for example 1,2-propylene glycol, ethylene glycol, diethylene glycol, triethylene glycol, 1,3-propanediol, dipropylene glycol, tripropylene glycol, neopentyl glycol , hydrogenated bisphenol-A. or ethoxylated /propoxylated bisphenol A.

According to a preferred embodiment the molecular weight of the diol in the unsaturated polyester resin is in the range from 60 to 250 Dalton. In a preferred embodiment at least part of the diols is selected from either isosorbide or 1,3-propanediol or both, preferably derived from a non fossil source like for example corn.

Preferably the total amount of diacids ranges from 20 to 80mol% and the total amount of diols ranges from 20 to 80 mol% (in which 100 mol% is sum diols and diacids).

In the unsaturated polyester resin according to the invention, preferably at least 25wt.% of the dicarboxylic acid building blocks are itaconic acid building blocks. More preferably, at least 55wt.% of the dicarboxylic acid building blocks in the unsaturated polyester according to the invention are itaconic acid building blocks.

The unsaturated polyester according to the invention is preferably homopolymerizable. Preferably at least 25wt.%, more preferably at least 55 wt.%, of the unsaturated dicarboxylic acid building blocks are itaconic acid building blocks.

In a preferred embodiment, at least part of the itaconic acid or itaconic anhydride is derived from a non-fossil source, for example from corn.

The unsaturated polyester comprising itaconate ester units as reactive unsaturations is preferably composed of from 33 to 66 mol % glycol monomers, from 10 to 66 mol % itaconic acid monomers, from 0 to 65 mol % unsaturated diacid monomers (other than itaconic acid monomers, like for example fumaric and maleic acid monomers) and from 0 to 65 mol % diacids other than unsaturated diacid monomers, preferably from 0 to 50 mol% diacids other than unsaturated diacid monomers.

The acid value of the itaconate containing unsaturated polyester resin is preferably in the range from 30 to 100 mg KOH/g resin, more preferably from 35 to 75 mg KOH/g resin. As used herein, the acid value of the resin is determined titrimetrically according to ISO 2114-2000.

In one embodiment, the molar ratio of hydroxyl end groups and carboxylic acid end groups in the unsaturated polyester resin according to the invention is in the range from 0.33 to 0.9. In another embodiment, the molar ratio of hydroxyl end groups and carboxylic acid end groups in the unsaturated polyester resin according to the invention is in the range from 1.1 to 3.

The hydroxyl value of the itaconate containing unsaturated polyester resin is preferably higher than 25 and more preferably higher than 40 mg KOH/g resin. As used herein, the hydroxyl value of the itaconate containing polyester is determined according to ISO 4629-1996.

Preferably, the molecular weight of the unsaturated polyester comprising itaconate ester units as reactive unsaturations is at least 300 Dalton, preferably at least 500 Dalton and more preferably at least 750 Dalton. Preferably, the molecular weigth Mn of the unsaturated polyester comprising itaconate ester units as reactive unsaturations is at most 10.000 Dalton, more preferably at most 5000 Dalton. The molecular weight (Mn) is determined in tetrahydrofurane using GPC according to ISO 13885-1 employing polystyrene standards and appropriate columns designed for the determination of the molecular weights.

In a preferred embodiment of the invention, the molecular weight Mn is in the range from 750 to 5000 Dalton.

The glass transition temperature T_{g} of the unsaturated polyester is preferably at least -70°C and at most 100°C. In case the unsaturated polyester is applied for construction purposes, the glass transition temperature T_{g} of the unsaturated polyester resin present in the resin composition according to the invention is preferably at least -70°C, more preferably at least -50°C and even more preferably at least -30°C. The T_{g} of the unsaturated polyester resin present in the resin composition according to the invention is preferably at most 70°C, more preferably at most 50°C and even more preferably at most 30°C. As used herein, the T_{g} is determined by means of DSC (heating rate 5 °C/min).

The present invention also relates to a resin composition comprising an unsaturated polyester comprising itaconate ester units, benzoquinone and alkyl substituted benzoquinone. The resin composition comprises benzoquinone and alkyl substituted benzoquinone, whereby the total amount of benzoquinone and alkyl substituted benzoquinone is at least 200ppm, preferably at least 300 ppm (relative to the total resin composition). Generally the amount of benzoquinone and alkyl substituted benzoquinone is at most 2000 ppm, more preferably at most 750 ppm. Preferably, the alkyl substituted benzoquinone is 2-methyl benzoquinone. The resin composition preferably comprises reactive diluent.

In one embodiment, the unsaturated polyester resin according to the invention can be applied as a powder coating resin. The preparation of powder coating compositions is described by Misev in "Powder Coatings, Chemistry and Technology" (pp. 224-300; 1991, John Wiley) hereby incorporated by reference. Therefore the present invention also relates to a powder coating composition comprising the unsaturated polyester as prepared with the process according to the invention. In case the unsaturated polyester according to the invention is applied in a powder coating composition, the glass transition temperature T_{g} of the unsaturated polyester resin is preferably at least 20°C, more preferably at least 25°C and even more preferably at least 30°C and at most 100°C, more preferably at most 80°C and even more preferably at most 60°C.

A common way to prepare a powder coating composition is to mix the separately weight-out components in a premixer, heat the obtained premix, for example in a kneader, preferably in an extruder to obtain an extrudate, cool down the obtained extrudate until it solidifies and crush it into granules or flakes that are further grinded to reduce the particle size followed by appropriate classification to obtain a powder coating composition of the right particle size. Therefore, the invention also relates to a process for the preparation of a powder coating composition according to the invention comprising the steps of:
a. mixing the components of the powder coating composition to obtain a premix
b. heating the obtained premix, preferably in an extruder, to obtain an extrudate
c. cooling down the obtained extrudate to obtain a solidified extrudate and
d. breaking the obtained solidified extrudate into smaller particles to obtain the powder coating composition
and preferably comprising the further step of classifying the thus prepared powder particles via a sieve and collect sieve fraction with particle size below 90 µm.

The powder coating composition of the present invention may optionally contain the usual additives, such as for example fillers/pigments, degassing agents, flow agents, or (light) stabilizers. Examples of flow agents include Byk 361 N. Examples of suitable fillers/pigments include metal oxides, silicates, carbonates or sulphates. Examples of suitable stabilizers include UV stabilizers, such as for example phosphonites, thioethers or HALS (hindered amine light stabilizers). Examples of degassing agents include benzoin and cyclohexane dimethanol bisbenzoate. Other additives, such as additives for improving tribo-chargeability may also be added.

In another aspect, the invention relates to a process for coating a substrate comprising the following steps:
1) applying a powder coating composition according to the invention to a substrate such that the substrate is partially or fully coated with a coating.
2) heating the obtained partially or fully coated substrate for such time and to such temperature such that the coating is at least partially cured.

The powder coating composition of the present invention may be applied using the techniques known to the person skilled in the art, for example using electrostatic spray or electrostatic fluidized bed.

In a preferred embodiment of the invention, the process according to the invention further comprises the step of diluting the unsaturated polyester resin comprising itaconate ester units with one or more reactive diluents to obtain a resin composition suitable to be applied for construction purposes. In a preferred embodiment, the unsaturated polyester comprising itaconate ester units is diluted in styrene, dimethyl itaconate and/or a methacrylate.

The amount of such reactive diluent in the resin composition according to the invention is usually in the range from 5 to 75 wt.%, preferably in the range from 20 to 60 wt.%, most preferably in the range from 30 to 50wt.% (relative to the total amount of unsaturated polyester and reactive diluent present in the resin composition). The diluent will be applied, for instance, for lowering of the viscosity of the resin composition in order to make handling thereof more easy. For clarity purpose, a reactive diluent is a diluent that is able to copolymerize with the unsaturated polyester resin.. Ethylenically unsaturated compounds can be advantageously used as reactive diluent. Preferably, styrene, dimethyl itaconate and/or a methacrylate containing compound is used as reactive diluent. In one embodiment of the invention, styrene, α-methylstyrene, 4-methylstyrene, (meth)acrylate containing compounds, N-vinylpyrrolidone and/or N-vinylcaprolactam is used as reactive diluent. In this embodiment, styrene and/or (meth)acrylate containing compound is preferably used as reactive diluent and more preferably (meth)acrylate containing compound is used as reactive diluent. In another embodiment, itaconic acid or an ester of itaconic acid is used as reactive diluent. In a more preferred embodiment, the reactive diluent comprises an ester of itaconic acid and at least another ethylenically unsaturated compound, such as for example styrene, α-methylstyrene, , 4-methylstyrene, (meth)acrylates, N-vinylpyrrolidone and/or N-vinylcaprolactam. In this embodiment, the resin composition preferably comprises an ester of itaconic acid as reactive diluent and styrene as reactive diluent or a methacrylate containing compound as reactive diluent. A preferred ester of itaconic acid is dimethyl itaconate.

The resin composition preferably further comprises a co-initiator for the radical curing of the resin composition, in an amount of from 0.00001 to 10 wt% (relative to the total amount of unsaturated polyester and reactive diluent). A preferred co- initiator is an amine or a transition metal compound.

The amine co-initiator that may be present in the composition is preferably an aromatic amine and even more preferably a tertiary aromatic amine. Suitable accelerators include N,N-dimethylaniline, N,N-diethylaniline; toluidines and xylidines such as N,N-diisopropanol-para-toluidine; N,N-dimethyl-p-toluidine; N,N-bis(2-hydroxyethyl)xylidine and -toluidine. The amount of amine in the resin composition (relative to the total amount of unsaturated polyester and reactive diluent) is generally at least 0.00001 wt.% and preferably at least 0.01 wt.% and more preferably at least 0.1 wt.%. Generally, the amount of amine in the resin composition is at most 10 wt.%, preferably at most 5 wt.%.

Examples of suitable transition metal compounds as co-initiator are compounds of a transition metal with an atomic number of in the range from 22 to 29 or with an atomic number in the range from 38 to 49 or with an atomic number in the range from 57 to 79, such as vanadium, iron, manganese, copper, nickel, molybdenum, tungsten, cobalt, chromium compounds. Preferred transition metals are V, Cu, Co, Mn and Fe.

After having diluted the unsaturated polyester according to the invention with reactive diluent, additional radical inhibitors may be added. These radical inhibitors are preferably chosen from the group of phenolic compounds, benzoquinones, hydroquinones, catechols, stable radicals and/or phenothiazines. The amount of radical inhibitor that can be added may vary within rather wide ranges, and may be chosen as a first indication of the gel time as is desired to be achieved.

Suitable examples of radical inhibitors that can be used in the resin compositions according to the invention are, for instance, 2-methoxyphenol, 4-methoxyphenol, 2,6-di-t-butyl-4-methylphenol, 2,6-di-t-butylphenol, 2,4,6-trimethyl-phenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), galvinoxyl, aluminium-N-nitrosophenyl hydroxylamine, diethylhydroxylamine, phenothiazine and/or derivatives or combinations of any of these compounds.

Advantageously, the amount of radical inhibitor in the resin composition according to the invention is in the range from 0,0001 to 10 % by weight, (relative to the total amount of unsaturated polyester and reactive diluent). More preferably, the amount of inhibitor in the resin composition is in the range from 0,001 to 1 % by weight. The skilled man quite easily can assess, in dependence of the type of inhibitor selected, which amount thereof leads to good results according to the invention.

The present invention further relates to a process for radically curing the resin composition according to the invention, wherein the curing is effected by adding an initiator to the resin composition as described above. Preferably, the curing is effected at a temperature in the range from -20 to +200 °C, preferably in the range from -20 to +100 °C, and most preferably in the range from -10 to +60 °C (so-called cold curing). The initiator is a photoinitiator, a thermal initiator and/or redox initiator.

As meant herein, a photo initiator is capable of initiating curing upon irradiation Photo initiation is understood to be curing using irradiation with light of a suitable wavelength (photo irradiation). This is also referred to as light cure.

A photo-initiating system may consist of a photo initiator as such, or may be a combination of a photo initiator and a sensitizer, or may be a mixture of photo initiators, optionally in combination with one or more sensitizers.

The photo initiating system that can be used in the context of the present invention can be chosen from the large group of photo-initiating systems known to the skilled person. A vast number of suitable photo initiating systems, can be found in, for instance, Volume 3 of "Chemistry and Technology of UV and EB Formulations", 2nd Edition, by K. Dietliker and J. V. Crivello (SITA Technology, London; 1998).

The thermal initiator can be selected from azo compounds like for example azo isobutyronitril (AIBN), C-C labile compounds like for example benzopinacole, peroxides, and mixtures thereof. The thermal initiator is preferably an organic peroxide, or a combination of two or more organic peroxides.

The redox initiator is preferably an organic peroxide in combination with at least one of the above mentioned co-initiators. Examples of suitable peroxides are, for instance, hydroperoxides , peroxy carbonates (of the formula -OC(O)OO-), peroxyesters (of the formula -C(O)OO-), diacylperoxides (of the formula -C(O)OOC(O)-), dialkylperoxides (of the formula -OO-), etc.

The present invention further also relates to objects and parts prepared from such unsaturated polyester resin or to objects and structural parts prepared from unsaturated polyester resin compositions as described above, by curing with an initiator as described above. As used herein, structural resin compositions are capable of providing structural parts. Generally such resin compositions are non-aqueous systems. They contain at most 5% by weight of water, mainly resulting from the reactions during resin preparation. As meant herein, structural parts are considered to have a thickness of at least 0.5 mm and appropriate mechanical properties. End segments where the resin compositions according to the present invention can be applied are for example automotive parts, boats, chemical anchoring, roofing, construction, containers, relining, pipes, tanks, flooring, windmill blades.

The present invention in particular relates to cured objects or structural parts obtained by curing of a resin composition according to the invention with an initiator, preferably comprising a peroxide. According to one embodiment, the curing is preferably effected by moulding, more preferably the curing is effected by compression moulding to obtain in particular a SMC or BMC part. The moulding is preferably effected at a temperature of at least 130°C, more preferably at least 140°C; and at a temperature of at most 170°C, more preferably of at most 160°C.

The invention is now demonstrated by means of a series of examples and comparative examples. All examples are supportive of the scope of claims. The invention, however, is not restricted to the specific embodiments as shown in the examples.

### Standard Resin synthesis

The diols, diacids and/or anhydrides, optionally inhibitor and catalyst were charged in a vessel equipped with a packed column, a temperature measurement device and inert gas inlet. The mixture was heated slowly by usual methods to 200 °C. The mixture was kept at 200 °C until the distillation of water stopped. The packed column was removed and the mixture was kept under reduced pressure until the acid value reached a value below 50 mg KOH/g resin. Then the vacuum was relieved with inert gas, and the mixture was cooled down to 130 °C or lower. The solid UP resins were obtained in this way. Next the solid resin was dissolved in a reactive diluent at temperatures below 80 °C.

### Monitorina of curing

Curing was monitored by means of standard gel time equipment. This is intended to mean that both the gel time (T_{gel} or T_{25->35°c}) and peak time (Tₚₑₐₖ or T_{25->peak}) were determined by exotherm measurements according to the method of DIN 16945 when curing the resin with the peroxide as indicated.

### Mechanical Property determination

For the determination of mechanical properties 4 mm castings were prepared. After 16 hrs the castings were released from the mould and postcured using 24hr at 60C followed by 24hr at 80C.

Mechanical properties of the cured objects were determined according to ISO 527-2. The Heat Distortion Temperature (HDT) was measured according to ISO 75-A.

The viscosity of the dissolved resin was determined at 23°C using a physica instrument. The viscosity of the neat resin was determined at 125°C using a cone and plate setup (Brookfield CAP200+ cone 3).

### Examples in Table 1 (Examples A-K and 1-2)- not according to the invention

Resins were prepared via the standard synthesis procedure with the ingredients and inhibitors as listed in table 1.

**Table 1**

| | A | 1 | B | 2 | C | D | E | F | G | H | I | J | K |
|---|---|---|---|---|---|---|---|---|---|---|---|---|---|
| Itaconic acid | 732 | 732 | 732 | 732 | 732 | 732 | 732 | 732 | 732 | 732 | 732 | 732 | 732 |
| Propylene glycol | 471 | 471 | 471 | 471 | 471 | 471 | 471 | 471 | 471 | 471 | 471 | 471 | 471 |
| | | | | | | | | | | | | | none |
| Benzoquinone | 0.12 (100 ppm) | 0.6 (500 ppm) | | | | | | | | | | | |
| 2-methyl benzoquinone | | | 0.12 (100 ppm) | 0.6 (500 ppm) | | | | | | | | | |
| 2,3,5,6-tetrachloro-1,4-benzoquinone | | | | | 0.12 (100 ppm) | 0.6 (500 ppm) | | | | | | | |
| hydroquinone | | | | | | | 0.12 (100 ppm) | 0.6 (500 ppm) | | | | | |
| Tempol | | | | | | | | | 0.12 (100 ppm) | 0.6 (500 ppm) | | | |
| p-methoxy phenol | | | | | | | | | | | 0.12 (100 ppm) | 0.6 (500 ppm) | |
| | | | | | | | | | | | | | |
| Acid value of the resin (mgKOH/g resin) | 45 | 45 | 45 | 45 | 140 | 103 | 45 | 44 | 45 | 46 | 45 | 44 | 45 |
| Viscosity @ 125°C (cone and plate) dPas | Gel | 4.65 | Gel | 4.05 | Gel | Gel | 9.22 | 4.25 | Gel | gel | gel | gel | Gel |

The experiments A and B combined with the examples 1 and 2 clearly demonstrate the fact that benzoquinone and alkylated benzoquinones in amounts higher than 100 ppm can be applied successfully in the preparation of itaconate resins whereas employing amounts of 100 ppm or lower results in a gel. This is surprising considering the fact that the other inhibitors either result in a gel both at low and high amounts (comp G-J) or result in a liquid resin at 125°C both at low and high amounts (comp E-F). Furthermore, comparing examples 1 and 2 with experiment F shows that the obtained resins have similar viscosities and that therefore benzoquinone and an alkyl substituted benzoquinone are good alternatives to hydroquinone.

### Examples in Table 2: a) Examples 3, L, 4 and 6 not according to the invention, b) Examples 5 and 7 according to the invention

Resins were prepared via the standard synthesis procedure with the ingredients and inhibitors as listed in table 2. The resins were cured using 0.5 wt% of a cobalt solution
(NL-49P) followed by 2 wt.% Trigonox 44B as peroxide. The curing was monitored with the gel time equipment

**Table 2**

| | Example 3 | L | Example 4 | Example 5 | Example 6 | Example 7 |
|---|---|---|---|---|---|---|
| Itaconic acid | 732 | 732 | 732 | 732 | 732 | 732 |
| Propylene glycol | 471 | 471 | 471 | 471 | 471 | |
| 1,3-propylene glycol | | | | | | 235.5 |
| Ethylene glycol | | | | | | 192.1 |
| | | | | | | |
| Benzoquinone | 0.6 | | | 0.3 | | 0.3 |
| 2-methyl benzoquinone | | | 0.6 | 0.3 | 0.3 | 0.3 |
| Hydroquinone | | 0.6 | | | | |
| 2-methyl hydroquinone | | | | | 0.3 | |
| Viscosity @ 125°C (cone and plate) dPa.s | 4.65 | 4.25 | 4.05 | 3.48 | 3.36 | 2.60 |
| Acid value of the resin (mgKOH/g resin) | 45 | 44 | 45 | 45 | 45 | 45 |
| | | | | | | |
| | | | | | | |
| Reactive diluent | styrene | styrene | styrene | styrene | styrene | styrene |
| Solid content % | 65 | 65 | 65 | 65 | 65 | 65 |
| Viscosity @23°C mPa.s | 976 | 816 | 770 | 655 | 630 | 423 |
| | | | | | | |
| Tensile strength (MPa) | 71 | 58 | 63 | 56 | 57 | 43 |
| Tensile modulus (GPa) | 3.6 | 2.6 | 3.5 | 3.4 | 3.6 | 3.1 |
| Elongation at break (%) | 2.4 | 4.3 | 2.2 | 1.9 | 1.8 | 1.4 |
| Flexural strength (MPa) | 105 | 87 | 116 | 120 | 127 | 102 |
| Flexural modulus (GPa) | 3.9 | 2.8 | 3.8 | 3.5 | 3.7 | 3.3 |
| Barcol Hardness | 42 | 35 | 43 | 45 | 47 | 42 |
| HDT (°C) | 98 | 85 | 98 | 98 | 101 | 103 |

Table 2 shows also the mechanical properties of the cured resins that are tensile strength, tensile modulus, flexural strength, flexural modulus, Barcol hardness and especially the thermal stability as indicated by the HDT.

This is surprising since Table 1 shows that benzoquinone and alkyl substituted benzoquinone are less efficient inhibitors compared to hydroquinone as with 100 ppm benzoquinone or alkyl substituted benzoquinone the resin gels (experiments A and B).
Example 5 demonstrates that mixtures of benzoquinone with alkylated benzoquinones can be employed and that this combination results in a synergetic effect on the viscosity of the resin whilst maintaining the thermal stability. Example 7 shows that various diols can be used.

## Claims

1. Process for preparing unsaturated polyester resin comprising itaconate ester units as reactive unsaturations, wherein the process comprises reacting at least itaconic acid and/or itaconic anhydride and at least one diol in the presence of benzoquinone and alkyl substituted benzoquinone, whereby the total amount of benzoquinone and alkyl substituted benzoquinone is at least 200 ppm.

2. Process according to claim 1, wherein the total amount of benzoquinone and alkyl substituted benzoquinone is at least 300 ppm.

3. Process according to claim 1, wherein the total amount of benzoquinone and alkyl substituted benzoquinone is at least 400 ppm.

4. Process according to claim 1, wherein the process is effected in the presence of at least 200 ppm alkyl substituted benzoquinone and at least 200 ppm benzoquinone.

5. Process according to anyone of claims 1-4, wherein the alkyl substituted benzoquinone is 2-methyl benzoquinone.

6. Process according to anyone of claims 1-5, wherein the process further comprises the step of diluting the resin with reactive diluent.

7. Process according to claim 6, wherein the resin is diluted in styrene, dimethyl itaconate and/or a methacrylate.

8. Resin composition comprising unsaturated polyester resin comprising itaconate ester units and benzoquinone and alkyl substituted benzoquinone, wherein the total amount of benzoquinone and alkyl substituted benzoquinone is at least 200 ppm.

9. Resin composition according to claim 8, wherein the alkyl substituted benzoquinone is 2-methyl benzoquinone.

10. Resin composition according to anyone of claims 8-9, wherein the composition further comprises reactive diluent.

11. Cured object or structural part obtained from a resin composition according to anyone of claims 8-10 by curing with an initiator.

12. Cured object or structural part according to claim 11, wherein the initiator comprises a peroxide.

13. Use of the cured object or structural part of claim 11 or 12 in automotive parts, boats, chemical anchoring, roofing, construction, containers, relining, pipes, tanks, flooring or windmill blades.

14. Powder coating composition comprising an unsaturated polyester resin composition according to any one of claims 8-10.

## Patentansprüche

1. Verfahren zur Herstellung von ungesättigtem Polyesterharz, das Itaconatester-Einheiten als reaktive Ungesättigtheiten umfasst, bei dem man mindestens Itaconsäure und/oder Itaconsäureanhydrid und mindestens ein Diol in Gegenwart von Benzochinon und alkylsubstituiertem Benzochinon, wobei die Gesamtmenge von Benzochinon und alkylsubstituiertem Benzochinon mindestens 200 ppm beträgt.

2. Verfahren nach Anspruch 1, bei dem die Gesamtmenge von Benzochinon und alkylsubstituiertem Benzochinon mindestens 300 ppm beträgt.

3. Verfahren nach Anspruch 1, bei dem die Gesamtmenge von Benzochinon und alkylsubstituiertem Benzochinon mindestens 400 ppm beträgt.

4. Verfahren nach Anspruch 1, bei dem das Verfahren in Gegenwart von mindestens 200 ppm alkylsubstituiertem Benzochinon und mindestens 200 ppm Benzochinon durchgeführt wird.

5. Verfahren nach einem der Ansprüche 1-4, bei dem es sich bei dem alkylsubstituierten Benzochinon um 2-Methylbenzochinon handelt.

6. Verfahren nach einem der Ansprüche 1-5, bei dem das Verfahren ferner den Schritt des Verdünnens des Harzes mit reaktiven Verdünnungsmitteln umfasst.

7. Verfahren nach Anspruch 6, bei dem man das Harz in Styrol, Dimethylitaconat und/oder einem Methacrylat verdünnt.

8. Harzzusammensetzung, umfassend ungesättigtes Polyesterharz, umfassend Itaconatester-Einheiten und Benzochinon und alkylsubstituiertes Benzochinon, wobei die Gesamtmenge von Benzochinon und alkylsubstituiertem Benzochinon mindestens 200 ppm beträgt.

9. Harzzusammensetzung nach Anspruch 8, wobei es sich bei dem alkylsubstituierten Benzochinon um 2-Methylbenzochinon handelt.

10. Harzzusammensetzung nach einem der Ansprüche 8-9, wobei die Zusammensetzung ferner reaktive Verdünnungsmittel umfasst.

11. Gehärtetes Objekt oder Bauteil, erhalten aus einer Harzzusammensetzung nach einem der Ansprüche 8-10 durch Härten mit einem Initiator.

12. Gehärtetes Objekt oder Bauteil nach Anspruch 11, wobei der Initiator ein Peroxid umfasst.

13. Verwendung des gehärteten Objekts oder Bauteils nach Anspruch 11 oder 12 in Autoteilen, in Booten, bei der chemischen Verankerung, im Dachbau, im Hochbau, in Behältern, beim Nachfüttern, in Rohren, in Tanks, in Bodenbelägen oder in Windkraftwerksflügeln.

14. Pulverlackzusammensetzung, umfassend eine ungesättigtes Polyesterharz enthaltende Zusammensetzung nach einem der Ansprüche 8-10.

## Revendications

1. Procédé de préparation d'une résine de polyester insaturé comprenant des motifs d'ester d'itaconate comme insaturations réactives, le procédé comprenant la réaction au moins d'acide itaconique et/ou d'anhydride itaconique et d'au moins un diol en présence de benzoquinone et de benzoquinone à substitution alkyle, la quantité totale de benzoquinone et de benzoquinone à substitution alkyle étant d'au moins 200 ppm.

2. Procédé selon la revendication 1, dans lequel la quantité totale de benzoquinone et de benzoquinone à substitution alkyle est d'au moins 300 ppm.

3. Procédé selon la revendication 1, dans lequel la quantité totale de benzoquinone et de benzoquinone à substitution alkyle est d'au moins 400 ppm.

4. Procédé selon la revendication 1, le procédé étant effectué en présence d'au moins 200 ppm de benzoquinone à substitution alkyle et au moins 200 ppm de benzoquinone.

5. Procédé selon l'une quelconque des revendications 1 à 4, dans lequel la benzoquinone à substitution alkyle est la 2-méthylbenzoquinone.

6. Procédé selon l'une quelconque des revendications 1 à 5, le procédé comprenant en outre l'étape de dilution de la résine avec un diluant réactif.

7. Procédé selon la revendication 6, dans lequel la résine est diluée dans du styrène, de l'itaconate de diméthyle et/ou un méthacrylate.

8. Composition de résine comprenant une résine de polyester insaturé comprenant des motifs d'ester d'itaconate et de la benzoquinone et de la benzoquinone à substitution alkyle, la quantité totale de benzoquinone et de benzoquinone à substitution alkyle étant d'au moins 200 ppm.

9. Composition de résine selon la revendication 8, la benzoquinone à substitution alkyle étant la 2-méthylbenzoquinone.

10. Composition de résine selon l'une quelconque des revendications 8 à 9, la composition comprenant en outre un diluant réactif.

11. Objet ou pièce structurale durcis obtenus à partir d'une composition de résine selon l'une quelconque des revendications 8 à 10 par durcissement avec un initiateur.

12. Objet ou pièce structurale durcis selon la revendication 11, l'initiateur comprenant un peroxyde.

13. Utilisation de l'objet ou de la pièce structurale durcis de la revendication 11 ou 12 dans des pièces d'automobiles, des bateaux, l'ancrage chimique, des couvertures de toit, la construction, des récipients, le regarnissage, des tuyaux, des réservoirs, des revêtements de sol ou des pales d'éoliennes.

14. Composition de revêtement en poudre comprenant une composition de résine de polyester insaturé selon l'une quelconque des revendications 8 à 10.
